# FASCICULE DE BREVET EUROPEEN

(11) **EP 4 466 773 B1**
(45) Date de publication et mention de la délivrance du brevet: **28.01.2026**
(21) Numéro de dépôt: 23700890.9
(22) Date de dépôt: 17.01.2023
(51) Int. Cl.: H02J 7/00

(54) **PROCÉDÉ DE COMMANDE D'UNE BATTERIE ÉLECTRIQUE**
VERFAHREN ZUR STEUERUNG EINER ELEKTRISCHEN BATTERIE
METHOD FOR CONTROLLING AN ELECTRIC BATTERY

(30) Priorité: 19.01.2022 FR 2200439
(43) Date de publication de la demande: 27.11.2024
(73) Titulaire: WattAlps, 38430 Moirans (FR)
(72) Inventeur: DESBOIS-RENAUDIN, Matthieu, 38250 VILLARD-DE-LANS (FR); HANSER, Baptiste, 38000 Grenoble (FR); BASSET, Sylvain, 38500 LA BUISSE (FR)
(74) Mandataire: Regimbeau
(86) Numéro de dépôt international: PCT/EP2023/051022
(87) Numéro de publication internationale: WO 2023/139068

(56) Documents cités:
- JP-A- 2014 187 807
- US-A1- 2012 119 749
- US-A1- 2014 343 876

## Description

### DOMAINE DE L'INVENTION

La présente invention concerne un procédé de commande d'une batterie électrique comprenant au moins deux branches connectées en parallèle, chaque branche comprenant au moins un module de stockage d'énergie, et de préférence au moins deux modules de stockage d'énergie montés en série, chaque branche étant munie d'au moins un fusible de protection, le procédé permettant de détecter une anomalie de fusible et de modifier le fonctionnement d'un système de gestion de batterie en fonction de l'anomalie du fusible.

### ETAT DE LA TECHNIQUE

Les batteries électriques permettent de stocker l'énergie électrique sous forme chimique et de la restituer sous forme de courant continu, de manière contrôlée. Afin d'atteindre des puissances importantes requises pour des applications telles que la mobilité de véhicules, les batteries électriques sont formées d'assemblage d'éléments accumulateurs électro-chimiques désignés sous le terme de cellule. Ces éléments présentent une tension nominale assez faible, typiquement 3,7 V, et sont connectés électriquement en série et/ou parallèle pour atteindre des niveaux de tension et d'énergie compatibles avec les applications visées. De façon à faciliter l'assemblage et la maintenance des grandes batteries, mais aussi pour sécuriser ces étapes, une batterie est souvent découpée en sous-ensembles, appelés modules. Ces modules de batterie présentent en général une tension non dangereuse (inférieure à 60V), des dimensions et masse permettant une manipulation aisée. Ces modules peuvent être assemblés en série pour adapter le niveau de tension désirée et former une batterie complète, formant ainsi une branche. Ces branches peuvent ensuite être connectées en parallèle pour augmenter le niveau d'énergie embarquée par la batterie et donc atteindre une autonomie suffisante pour l'application visée.

Pour les grandes batteries, ce type d'architecture est répétée et des branches sont mises en parallèle de façon à augmenter la capacité embarquée, comme décrit dans le brevet EP3273567B1. Dans cet exemple, les deux polarités d'une branche sont reliées à une boite de jonction, qui contient les organes de sécurité. Cette configuration présente l'inconvénient d'utiliser plusieurs boites de jonction et une unité centrale supplémentaire, résultant en des coûts et un volume global plus importants, peu acceptable pour des applications embarquées.

Il est donc préférable d'utiliser des architectures avec des modules connectées en série pour former des branches, les branches étant elles-mêmes en parallèle pour former une matrice de module. Pour garantir la sécurité de ces installations, chaque branche est munie d'au moins un fusible de protection adapté pour interrompre le passage d'un courant électrique en cas de sur-courant dans ladite branche. Typiquement, des fusibles peuvent être mis au moins sur les polarités + et - de chaque branche, de façon à protéger les câbles de mise en parallèle et éviter un défaut général en cas de défaut sur une seule branche.

Ces architectures de batterie sont beaucoup moins volumineuses et beaucoup moins coûteuses mais elles présentent un inconvénient important : si un des fusibles est ouvert, il y a moins de cellules connectées à la boite de j onction. A puissance constante, le courant parcourant les autres cellules devient donc plus important, et peut possiblement atteindre des valeurs potentiellement dangereuses. Par exemple, avec 3 branches de modules connectés en parallèle, l'ouverture d'un fusible fait sortir une branche du circuit électrique. Il reste alors 2 branches de modules pour fournir ou absorber du courant. Soit 1/3 de modules en moins. Chaque branche restante doit donc fournir ou absorber 50% de courant en plus pour compenser la branche manquante. Dépasser de 50% les seuils limite de courant autorisé, notamment pendant la charge, peut détériorer les cellules de la batterie et à terme causer un départ de feu dans la batterie.

Il est donc nécessaire de s'assurer que les modules de la batterie ne sont pas soumis à des intensités ou tensions trop importantes, même en cas de fusible ouvert. La demande de brevet EP3576214 A1 propose un système de détection d'une mauvaise connexion de batterie par la surveillance de tension et de détection de résistance excessive, en comparant les tensions des cellules à la tension globale de la batterie. Ce système est très fortement dépendant des précisions de mesure des capteurs de tension de cellule et de tension d'une batterie complète. Pour des batteries de tension élevée (par exemple 800V), une erreur de mesure de 1% correspond déjà à deux fois la tension maximale d'une cellule lithium-ions.

En outre, des systèmes tels que celui proposé par la demande de brevet EP3576214 A1 proposent de couper la batterie en cas de détection d'une anomalie. Un véhicule électrique alimenté par la batterie est donc mis hors service en cas d'anomalie. Or, les fortes puissances et capacité requises pour la propulsion électrique d'un véhicule entraînent la nécessité de disposer d'une batterie formée de nombreuses cellules, augmentant le risque d'anomalies. La batterie peut alors manquer de fiabilité pour remplir sa fonction d'alimentation d'un véhicule électrique.

Il existe donc un besoin pour un procédé de commande d'une batterie électrique qui permette d'assurer une alimentation électrique à la charge alimentée par la batterie, tout en assurant que les marges de sécurité électrique des modules de batterie sont conservées, même en cas d'anomalie telle que l'ouverture d'un fusible.

### EXPOSE DE L'INVENTION

Il est proposé un procédé de commande d'une batterie électrique munie d'un système de gestion de batterie , la batterie électrique comprenant au moins deux branches connectées en parallèle, chaque branche comprenant au moins un module de stockage d'énergie, les branches étant électriquement reliées à un boîtier de jonction par lequel transite le courant de la batterie, chaque branche étant munie d'au moins un fusible de protection adapté pour interrompre le passage d'un courant électrique en cas de sur-courant dans ladite branche, le procédé comprenant :
- une détermination d'une absence ou d'une présence d'un courant de branche circulant dans une branche, et d'une absence ou d'une présence d'un courant de jonction correspondant au cumul des courants circulant dans les branches,
- une vérification de cohérence entre l'absence ou la présence d'un courant de branche et l'absence ou la présence d'un courant de jonction, une anomalie du fusible sur ladite branche étant considérée en cas d'incohérence,
- une modification du fonctionnement du système de gestion de batterie en fonction de l'anomalie du fusible, dans lequel l'autre branche continue de fournir du courant.

Le procédé de commande selon l'invention se contente de détecter l'absence ou la présence d'un courant de branche, et ne nécessite donc pas de dispositif de mesure précis ou complexe par opposition à des procédés nécessitant une mesure précise du courant. En outre, même en cas d'anomalie de fusible sur une branche, la batterie continue à fournir de l'électricité.

Avantageusement, mais facultativement, le procédé peut comprendre l'une au moins parmi les caractéristiques suivantes, prise seule ou dans une quelconque combinaison :
- chaque branche comprend au moins deux modules de stockages d'énergie montés en série ;
- la modification du fonctionnement du système de gestion de batterie comprend une réduction d'une limite de courant de jonction ;
- la réduction de la limite du courant de jonction est fonction d'un facteur correspondant à la part de la branche dans la fourniture de courant de la batterie ;
- la détermination d'une absence ou d'une présence d'un courant de branche circulant dans une branche comprend la mesure de l'intensité du courant de branche en utilisant une tension aux bornes d'une partie conductrice d'un module de stockage d'énergie de ladite branche , ladite partie conductrice formant une portion d'un circuit de puissance par lequel transite au moins une partie du courant de branche ;
   - la tension aux bornes d'une partie conductrice d'un module est déterminée à partir d'un point de mesure parmi des points de mesure utilisés par une carte électronique du module pour déterminer des tensions internes audit modules, et à partir d'un autre point de mesure correspondant à une borne de connexion de puissance du module ;
   - la partie conductrice d'un module est une barre omnibus, ou bus-barre ;
   - la détermination d'une absence ou d'une présence d'un courant de branche circulant dans une branche comprend une mesure du courant de branche, et la comparaison avec au moins un seuil, l'absence ou la présence d'un courant de branche étant déterminée en fonction d'un résultat de la comparaison ;
   - la détermination d'une absence ou d'une présence d'un courant de branche circulant dans une branche est basée sur une pluralité de mesures de courant dans la branche en différents points de ladite branche, l'absence ou la présence d'un courant de branche étant déterminée à partir d'une valeur dérivée de la pluralité de mesures de courant.

L'invention concerne également une batterie électrique munie d'un système de gestion de batterie, la batterie électrique comprenant au moins deux branches connectées en parallèle, chaque branche comprenant au moins un module de stockage d'énergie ou des modules de stockage en série, les branches étant électriquement reliées à un boîtier de jonction par lequel transite le courant de la batterie, chaque branche étant munie d'au moins un fusible de protection adapté pour interrompre le passage d'un courant électrique en cas de sur-courant dans ladite branche, le système de gestion de batterie étant configuré pour mettre en œuvre :
- une vérification de cohérence entre l'absence ou la présence d'un courant de branche et l'absence ou la présence d'un courant de jonction, une anomalie du fusible sur ladite branche étant considérée en cas d'incohérence,
- une modification du fonctionnement du système de gestion de batterie en fonction de l'anomalie du fusible, dans lequel l'autre branche continue de fournir du courant, conformément au procédé selon l'invention.

L'invention concerne également un véhicule à propulsion électrique comprenant la batterie électrique selon l'invention.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre schématiquement la configuration d'une batterie alimentant une machine, dans un exemple avec trois branches, selon un mode de réalisation possible de l'invention ;
- La figure 2 montre un exemple d'un module de stockage d'énergie selon un mode de réalisation possible de l'invention ;
- La figure 3 illustre un détail d'une face avant d'un module, montrant le bus barre reliant deux points de mesure ;

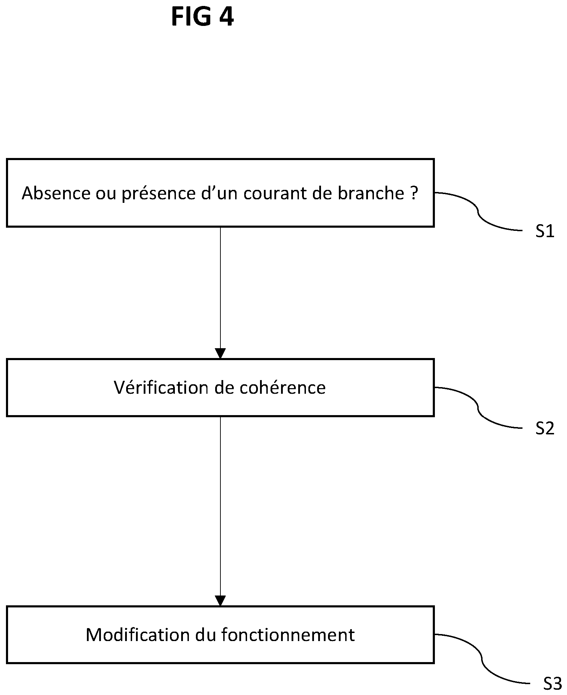

- La figure 4 est un diagramme illustrant schématiquement des étapes du procédé selon un mode de réalisation possible de l'invention.

Sur l'ensemble des figures, les éléments similaires portent des références identiques.

### DESCRIPTION DETAILLEE

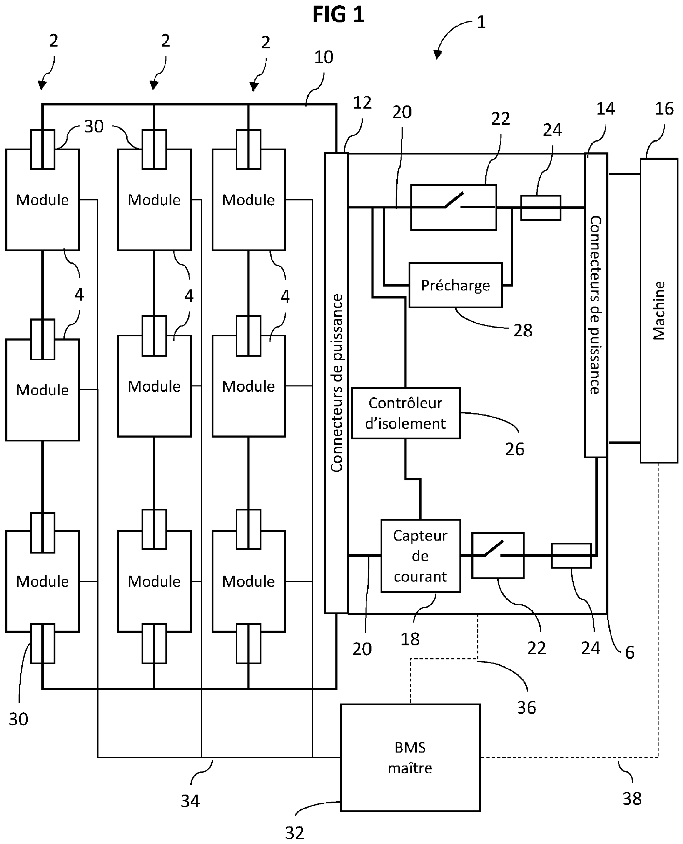

En référence à la Figure 1, une batterie électrique 1 comprend au moins deux branches 2 connectées en parallèle, et dans cet exemple simplifié comprend trois branches 2. Des branches 2 supplémentaires peuvent être prévues en fonction des applications visées. De préférence, afin de pouvoir assurer une capacité importante de la batterie 1, la batterie 1 comprend typiquement plus de 10 branches 2 en parallèles. Chaque branche 2 comprend au moins un module 4 de stockage d'énergie, et de préférence plusieurs modules 4 de stockage d'énergie montés en série comme par exemple trois modules 4 par branche 2 dans la Figure 1. De préférence, chaque branche 2 comprend le même nombre de modules 4. Le montage de branches 2 en parallèle permet d'augmenter la puissance ou l'énergie de la batterie électrique 1.

Comme évoqué plus haut, chaque module 4 est un assemblage d'éléments accumulateurs électro-chimiques dans un boîtier. Typiquement, la tension nominale aux bornes d'un module est comprise entre 30 V et 100 V, et est par exemple de 60 V. Le montage en série de plusieurs modules 4 dans une branche 2 permet d'augmenter la tension aux bornes de la branche 2. La demande de brevet FR3089067 décrit un exemple de module pouvant être utilisé. Un module 4 est généralement pourvu d'une électronique de gestion, permettant par exemple de mesurer la température ou la tension aux bornes du module 4.

Les branches 2 sont électriquement reliées à un boîtier de jonction 6 par lequel transite le courant de la batterie 1. Plus précisément, un circuit de puissance 10 relie les branches 2 parallèles à des connecteurs de puissance 12 du boîtier de jonction 6. D'autres connecteurs de puissance 14 du boîtier de jonction 6 sont reliés à la machine 16 que la batterie 1 alimente en électricité, dans cet exemple de configuration de décharge de la batterie 1. Dans une configuration de charge de la batterie, c'est bien sûr une alimentation qui est connectée aux connecteurs de puissance 14 du boîtier de jonction, afin de recharger les modules 4 de stockage d'énergie. De préférence, la machine 16 alimentée par la batterie 1 est un véhicule électrique, la batterie fournissant l'énergie électrique propulsive dudit véhicule.

Le boîtier de jonction 6 peut comporter des composants adaptés pour remplir différentes fonctions d'interfaçage de la batterie. La boîte de jonction 6 peut comprendre un capteur de courant 18 sur au moins une voie d'alimentation 20, permettant une mesure de courant sur ladite voie d'alimentation 20. On entend par mesure de courant une mesure permettant de déterminer les caractéristiques d'un courant électrique. Typiquement, une mesure de courant est une mesure représentative de l'intensité du courant, et peut être une mesure directe de cette intensité, ou peut être une mesure d'une tension proportionnelle à l'intensité de ce courant.

Comme dans l'exemple illustré, la boîte de jonction 6 peut comprendre des interrupteurs 22, éventuellement couplés en série avec des fusibles 24, par exemple sur chacune des deux voies d'alimentation 20. La boîte de jonction 6 peut comprendre un contrôleur d'isolement 26 entre les deux voies d'alimentation 20, et par exemple un circuit de précharge en parallèle d'un interrupteur 22 sur une voie d'alimentation 20.

Chaque branche 2 est munie d'au moins un fusible 30 de protection adapté pour interrompre le passage d'un courant électrique en cas de sur-courant dans ladite branche 2. De préférence, chaque branche 2 comprend au moins un fusible 30 à chaque extrémité de ladite branche 2. Typiquement, et comme illustré, un fusible 30 peut être associé à chaque module 4 de la branche 2.

La batterie 1 est munie d'un système de gestion de batterie, plus communément désigné par l'acronyme BMS pour l'anglais "Battery management system". Le BMS est désigné comme maître pour le distinguer d'autres BMS pouvant être associés à chaque module 2, désigné comme BMS esclave car subordonné au BMS maître. Ces BMS de modules 4 sont les circuits de gestion mentionnés plus haut. Par la suite, le terme BMS désigne le BMS maître. Le BMS 32 est relié à chacun des modules 4 par des canaux de communication 34 sur lesquels transitent des signaux tels que des mesures ou des commandes. Le BMS 32 est également relié à la boîte de jonction 6 par des canaux de communication 36 sur lesquels transitent des signaux tels que des mesures ou des commandes. Le BMS 32 peut également être relié à la machine 16 par un canal de communication 38, servant d'interface de communication entre la batterie 1 et la machine 16. Le BMS 32 est un organe de commande qui comprend un processeur et une mémoire, et qui est capable de communiquer.

Chaque branche 2 est munie d'au moins un capteur de courant, permettant une mesure du courant de branche sur ladite branche, c'est-à-dire le courant circulant d'une extrémité à l'autre de la branche 2. Typiquement, le capteur de courant est intégré à un module 4. De préférence, chaque module 4 est muni d'un tel capteur de courant, afin d'uniformiser les modules. Toutefois, une seule mesure de courant par branche 4 est requise. Le capteur de courant mesure une tension aux bornes d'une partie conductrice d'un module 4 de stockage d'énergie, cette tension étant représentative de l'intensité du courant de branche circulant dans la branche 2 de la batterie 1. De préférence, la partie conductrice du module 4 de stockage d'énergie aux bornes desquelles est mesurée la tension comprend une portion d'un circuit de puissance par lequel transite tout ou partie du courant de la branche. De préférence, au moins 50%, et de préférence encore au moins 75 % du courant de branche traverse la portion d'un circuit de puissance aux bornes desquelles est mesurée la tension. Une telle portion d'un circuit de puissance présente typiquement une résistance supérieure à 150 microohm, et de préférence supérieure à 300 µΩ. De préférence, cette portion du circuit de puissance est une barre omnibus, ou busbar, c'est-à-dire un conducteur reliant plusieurs circuits électriques en des points séparés, en l'occurrence reliant plusieurs modules 4 entre eux.

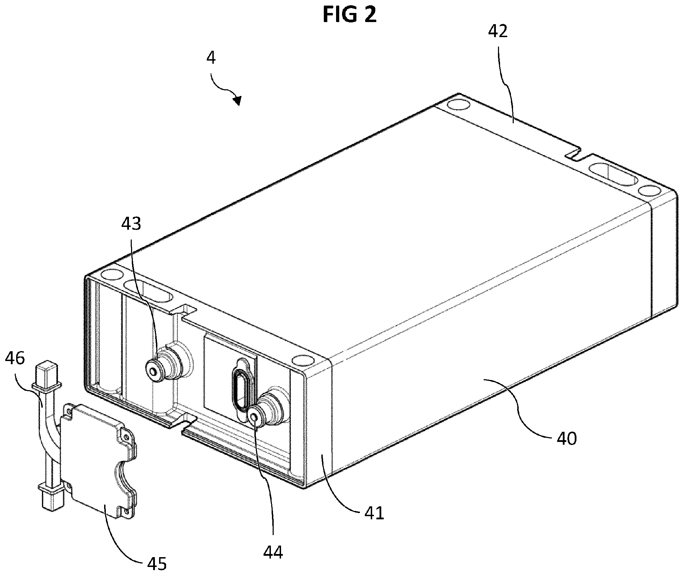

En référence à la figure 2, chaque module 4 comprend un carter, ou coffre, comprenant une pluralité de parois, typiquement un boîtier 40 présentant une forme sensiblement parallélépipédique et deux capots 41, 42 fermant hermétiquement le boîtier 40, définissant ensemble une enceinte étanche. Le terme « étanche » s'entend ici d'une étanchéité à tout type d'élément fluide, tel que l'eau et/ou l'air, que ce soit dans leur mouvement de l'extérieur vers l'intérieur de l'enceinte, ou de l'intérieur vers l'extérieur de l'enceinte. Un assemblage de cellules est agencé au sein de l'enceinte, chaque cellule comprenant un accumulateur électrochimique. De telles batteries électriques ont, par exemple, été décrites dans la demande de brevet WO 2020/109714.

Chaque module 4 comprend des bornes de connexion 43, 44 configurées pour être couplées à des connecteurs de puissance reliant entre eux les modules 4, notamment pour relier en série des modules 4 d'une même branche 2. Plus précisément, chaque module 4 comprend une première borne 43, qui correspond par exemple à la borne négative "-", et une seconde borne 44, qui correspond par exemple à la borne négative "+". Lors du branchement en série des modules 4, la première borne 43 d'un module 4 est connectée à la seconde borne 44 d'un module 4 précédent, et la seconde borne 44 dudit module 4 est connectée à la première borne 43 d'un module 4 suivant. Les modules 4 aux extrémités d'une branche 2 ont une borne 43, 44 connectée à un circuit de puissance 10. Typiquement, ces bornes de connexion 43, 44 font saillie d'un capot 41 désigné comme formant la face avant.

Afin de pouvoir mesurer au moins une parmi la tension délivrée par chaque cellule ou groupe de cellule et la température de chaque cellule ou groupe de cellule, plusieurs capteurs sont agencés à l'intérieur du boîtier 40. Chaque capteur est configuré pour émettre un signal, de préférence électrique, en fonction de valeurs de tension et/ou de température relevées au niveau d'une ou plusieurs cellules. Ce signal doit ensuite être recueilli pour être traité à l'extérieur de l'enceinte.

En référence à la figure 1, en vue de faire transiter ce signal émis par le capteur depuis l'intérieur vers l'extérieur de l'enceinte, une carte électronique 45 est avantageusement rapportée au niveau d'une surface externe d'une paroi du boîtier 40, de préférence une paroi de l'un des deux capots 41, 42, comme visible sur la figure 1. Comme visible sur la figure 1, des connecteurs 46, de préférence de type électrique, sont avantageusement reliés à la carte électronique 45, de façon à faire transiter un signal depuis la carte électronique 45 vers un autre élément de la batterie électrique, typiquement le système de gestion de batterie 32. Un autre connecteur, non représenté, relie typiquement la carte électronique 45 avec l'intérieur du boîtier 40, et notamment les capteurs internes. La carte électronique 45 est munie de moyens de traitement tels qu'une puce électronique, comme par exemple la puce MAX17852 ou MAX17853 de Maxim Integrated ou la puce MC33771 de NXP, qui sont spécifiquement développées pour la surveillance de batterie.

Comme évoqué précédemment, des capteurs internes sont configurés pour mesurer des tensions entre des ensembles de cellules. Ces mesures de tension sont effectuées entre des points de mesure à différents potentiels, représentatifs de l'élévation graduelle de la tension dans l'assemblage de cellules du module 4. La pluralité de mesure de tension en découlant sont notamment utilisées pour vérifier que la tension aux bornes de chaque cellule ou groupe de cellules reste dans des plages de valeurs ne dégradant pas les cellules. En effet, en raison de la nature électro-chimiques des cellules, une tension trop faible peut entraîner des problèmes notamment à la recharge, tandis qu'une tension trop élevée entraîne un risque d'incendie.

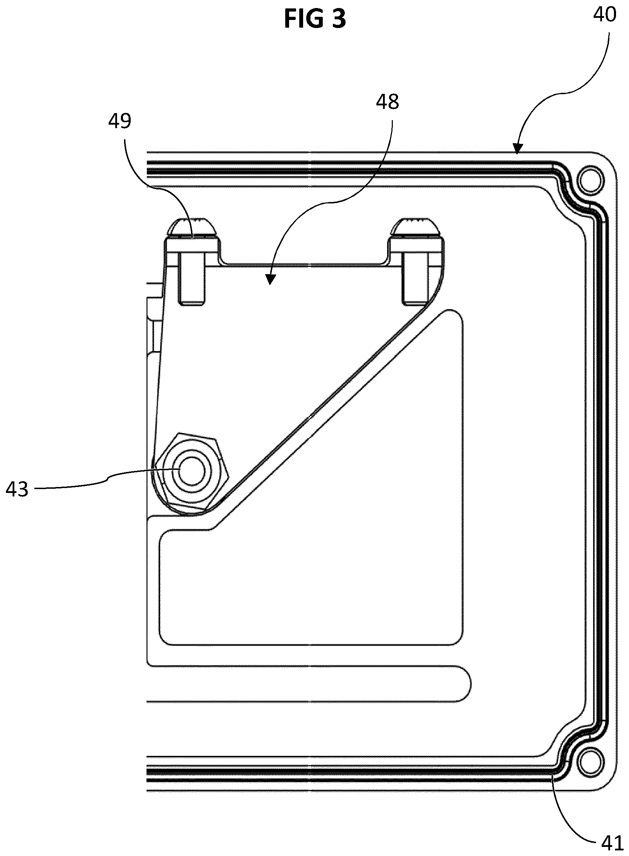

Parmi les points de mesure d'un module 4, un point de mesure correspond à une tension extrémale, c'est-à-dire au potentiel le plus faible ou le plus haut parmi ceux utilisés par les capteurs, et qui correspond à la mesure à une extrémité de l'assemblage de cellule. En référence à la Figure 3, cette extrémité de l'assemblage de cellule est électriquement reliée par une partie conductrice à une borne de connexion 43, 44 formant la connectique de puissance en sortie du module 4. Le courant du module 4, et donc de la branche 2 à laquelle appartient ledit module 4 circule dans cette partie conductrice, qui forme donc une portion du circuit de puissance et prend généralement la forme d'une barre omnibus 48.

Dans l'exemple illustré, une fixation 49 de la barre omnibus 48, sous la forme d'une vis, correspond au premier point de mesure avec le potentiel le plus bas. Un fil attaché à la fixation 49 permet par exemple de relever le potentiel le plus bas. La barre omnibus 48 relie ce point de mesure à la seconde borne de connexion 43. Cette borne de connexion 43 forme le second point de mesure, permettant de relever un potentiel légèrement différent de celui du premier point de mesure. La différence entre les potentiels provient du courant de branche circulant dans la barre omnibus 48. La mesure de tension reposant sur ces deux points de mesure est donc représentative de l'intensité du courant de branche.

Une telle approche permet d'exploiter un point de mesure parmi ceux déjà utilisés pour la surveillance de la tension dans le module 4. Le second point de mesure est de préférence une borne de connexion 43, 44, qui est à la fois facilement accessible et séparée par une partie conductrice du module 4 formant une portion du circuit de puissance.

Le premier point de mesure et le second point de mesure peuvent être reliés à la carte électronique externe 45, qui peut en déduire les écarts de potentiel, même faibles, entre les deux points de mesure, et en déduire une mesure de courant. Il est également possible d'exploiter deux mesures de tension, l'une impliquant le premier point de mesure et l'autre impliquant le second point de mesure (par exemple par rapport à une référence commune), et de déterminer en tant que mesure de tension représentative du courant de branche une différence entre ces mesures de tension. Il est possible d'utiliser un amplificateur opérationnel pour relever les mesures comme par exemple celui existant dans les circuits MAX17852 de Maxim Integrated ou MC33771 de NXP.

Contrairement à des systèmes de l'état de la technique, la mesure du courant ne se fait pas aux bornes d'une résistance de précision calibrée, de seulement quelques µΩ, connectée en série avec l'ensemble du circuit, nécessitant d'avoir un module de bas de branche différent des autres modules. De façon classique, cette résistance de précision (ou "shunt" en anglais) est réalisée dans un matériau particulier de façon à conserver sa valeur de résistance en toute condition, par exemple en alliage cuivre-magnésium-nickel. De telles mesures de courant de l'état de la technique doivent en effet être précise pour des applications telles qu'une estimation précise de l'état de charge de la batterie 1, qui est calculé par intégration et requiert donc une grande précision.

Dans la présente invention, il n'est pas nécessaire que la mesure du courant de branche soit très précise, car elle ne vise qu'à détecter la présence ou l'absence de circulation d'un courant de branche, comme décrit dans le procédé ci-après.

Le procédé est destiné à être mis en œuvre continument de façon itérative. En référence à la figure 3, lors d'une première étape S1, une absence ou une présence d'un courant de branche circulant dans une branche 2 est déterminée. La détermination de l'absence ou de la présence d'un courant de branche circulant dans la branche 2 peut typiquement comprendre la mesure de l'intensité du courant de branche en utilisant un capteur mesurant une tension aux bornes d'une partie conductrice d'un module 4 de stockage d'énergie de ladite branche 2, comme expliqué plus haut. Typiquement, une telle mesure de courant est ensuite comparée à un seuil, et l'absence ou la présence d'un courant de branche est déterminée en fonction d'un résultat de la comparaison.

Par exemple, il est possible de comparer la mesure de courant à un seuil de charge représentatif d'un courant de charge, par exemple supérieur à 250 mA si la mesure est en intensité ou supérieur à 62,5 mV si la mesure est en tension. Si la mesure de courant est supérieure à ce seuil de charge, cela signifie qu'un courant de charge circule dans la branche 2. Si la mesure de courant est inférieure à ce seuil de charge, cela signifie soit qu'aucun courant de branche ne circule, soit qu'un courant de décharge circule. Il est donc possible de comparer la mesure de courant à un seuil de décharge représentatif d'un courant de décharge, par exemple inférieur à -250 mA si la mesure est en intensité ou inférieur à -62,5 mV si la mesure est en tension. Si la mesure de courant est inférieure à ce seuil de décharge, cela signifie qu'un courant de décharge circule dans la branche 2. Si la mesure de courant est supérieure à ce seuil de décharge, cela signifie soit qu'aucun courant de branche ne circule, soit qu'un courant de charge circule. Il est donc déterminé une présence ou une absence de circulation d'un courant de branche si la mesure de courant est entre le seuil de charge et le seuil de décharge. Pour simplifier, il est possible de comparer une valeur absolue de la mesure de courant à un seuil, en-dessous duquel il est déterminé une absence de courant dans la branche 2.

Il est possible que plusieurs mesures de courant soient disponibles, notamment lorsque plusieurs capteurs de courant sont disponibles sur la même branche 2, en différents points de la branche, par exemple avec un capteur de courant par module 4 de stockage d'électricité. Dans ce cas, l'absence ou la présence d'un courant de branche est déterminée à partir d'une valeur dérivée de la pluralité de mesures de courant. Typiquement, une moyenne des mesures de courant peut être déterminée, et c'est cette moyenne qui est utilisée comme mesure de courant lors de la comparaison à au moins un seuil.

La simple détermination d'une absence ou d'une présence d'un courant de branche circulant dans une branche ne suffit pas à déterminer une anomalie du fusible 30 sur cette branche 2 telle qu'une ouverture du fusible 30. L'absence de courant de branche peut également être normale en absence de puissance échangée entre la batterie 1 et la machine 16 à laquelle ladite batterie 1 est connectée (par exemple un véhicule ou une alimentation). Il est donc nécessaire de vérifier la cohérence entre l'absence ou la présence d'un courant de branche et l'absence ou la présence d'un courant de jonction circulant dans la boîte de jonction 6 et correspondant au cumul des courants circulant dans les branches 2. Pour ce faire, il est déterminé une absence ou une présence du courant de jonction, par exemple au moyen du capteur de courant 18 présent dans la boîte de jonction. De manière similaire au courant de branche, la mesure de courant est comparée à un seuil, et l'absence ou la présence d'un courant de jonction est déterminée en fonction d'un résultat de la comparaison.

La cohérence entre l'absence ou la présence d'un courant de branche et l'absence ou la présence d'un courant de jonction signifie qu'à une absence d'un courant de branche doit correspondre une absence de courant de jonction, et inversement, et qu'à une présence d'un courant de branche doit correspondre une présence d'un courant de jonction. En cas d'incohérence, notamment en cas d'absence d'un courant de branche et de présence d'un courant de jonction, il est considéré que le fusible 30 sur ladite branche 2 présente une anomalie. Une anomalie du fusible 30 est typiquement le fait que le fusible 30 soit ouvert, par exemple suite à un courant de trop forte intensité sur la branche 2. Il est possible que l'absence ou la présence d'un courant de branche, comme l'absence ou la présence d'un courant de jonction, puisse être chacune traduite par un indicateur, par exemple une valeur haute ou basse d'une tension, voire par une valeur numérique. Dans ce cas, la comparaison revient simplement à comparer des indicateurs, par exemple numériquement ou avec des portes logiques.

Suite à la détermination d'une anomalie du fusible 30 sur la branche 2, il est procédé à une modification du fonctionnement du système de gestion de batterie, ou BMS 32, en fonction de l'anomalie du fusible (étape S3), dans lequel l'autre branche continue de fournir du courant. La modification du fonctionnement du système de gestion de batterie 32 prend en compte l'indisponibilité de la branche 2 sur laquelle l'anomalie a été détectée sans toutefois interrompre l'alimentation électrique de la machine 16, ou le rechargement de la batterie 1. De préférence, la modification du fonctionnement du système de gestion de batterie 32 comprend une réduction d'une limite de courant de jonction. Cette réduction est avantageusement fonction d'une limite de courant associée à la branche 2 affectée par l'anomalie de fusible. Préférentiellement, le système de gestion de batterie 32 adapte au moins un seuil de courant maximal autorisé en fonction du nombre de branches 2 non affectées par une anomalie de fusible.

Typiquement, la limite du courant de jonction est une information transmise à la machine ou véhicule 16, qui peut ainsi contrôler l'intensité du courant tiré de la batterie en fonction de cette limite du courant de jonction. Il est également possible de prévoir une procédure de sécurité pour la batterie si le courant de jonction dépasse la limite du courant de jonction, par exemple parce que la machine 16 ne prend pas en compte l'information sur la limite du courant de jonction. La procédure de sécurité peut comprendre la déconnexion de la batterie, par exemple par ouverture d'au moins un interrupteur 22 sur une voie d'alimentation 20, ou par une mise en défaut de la batterie, avec une information de défaut envoyée à la machine 16.

A titre d'exemple, sur la figure 1, la batterie comprend trois branches 2 en parallèle. Le système de gestion de batterie 32 est configuré pour limiter le courant maximal transitant par la boîte de jonction, pour d'évidentes raisons de sécurité. En cas d'ouverture du fusible 30 sur une branche 2, cette branche 2 ne peut plus fournir sa part de courant. Le courant total devra donc être fourni par les deux autres branches 2 restantes, qui se retrouvent donc à fournir 50% de courant en plus que précédemment, afin de compenser la branche manquante. Cette augmentation de 50% du courant peut dépasser la limite autorisée pour une branche 2, et mener à une détérioration de la batterie, voire causer un départ de feu dans la batterie 1. Bien entendu, l'effet de l'indisponibilité d'une branche est moins critique lorsque les branches 2 sont nombreuses. Par exemple, la perte d'une branche 2 parmi dix branches 2 n'implique qu'une augmentation de 10% pour le courant des branches 2 restantes. Toutefois, même une faible augmentation peut avoir des conséquences, d'autant plus que la batterie 1 est généralement configurée pour être répondre à des pointes de puissance. Dans la mesure où une marge de sécurité se traduit par une surcapacité en modules 4, et donc par des coûts, du poids et de l'encombrement, il est préférable de maintenir cette marge aussi basse que possible. Ainsi, même un report mineur de courant sur les branches 2 restantes peut suffire à sur-solliciter les modules des branches restantes.

Ainsi, selon l'invention, en détectant l'anomalie de fusible 30, un seuil de courant autorisé est diminué proportionnellement à la part de la branche 2 affectée dans la répartition des courants. Appelons V₁ le courant de jonction maximal autorisé lorsque toutes les branches 2 sont connectées et délivrent du courant. En présence de n branches identiques (n≥2) en fonctionnement, la détection d'une anomalie de fusible sur une branche entraîne une réduction du seuil maximal de courant de jonction V₁ par un facteur (n-1)/n. Avec des branches 2 de préférence similaires, la limite de courant sera ainsi réduite d'un tiers pour trois branches 2, et de 10% pour dix branches 2. Les branches 2 restantes ne sont donc pas soumises à une sollicitation maximale plus élevée qu'avant. Il est toutefois possible d'utiliser d'autres facteurs de réduction, admettant par exemple une réduction des marges de sécurité, en supposant que l'anomalie n'a pas vocation à perdurer, et qu'un remplacement du fusible 30 interviendra rapidement.

Le procédé proposé ne prévoit donc pas l'arrêt de la batterie 1, mais prévoit à la place un mode de fonctionnement dégradé, dans lequel la puissance maximale autorisée est réduite, via une réduction du maximum autorisé pour le courant de jonction. Le procédé est donc spécialement adapté à la fourniture électrique d'un véhicule électrique, qui ne tolère pas d'interruption de fourniture électrique. Il est à noter que si les exemples ci-dessous ne mentionnaient qu'une ouverture de fusible 30 affectant une branche 2, il est possible que plusieurs branches successives soient affectées. Dans ce cas, le procédé est réitéré et détecte chaque anomalie de fusible 30, entraînant une adaptation successive du fonctionnement du système de gestion de batterie 32. Le procédé est donc adapté pour faire face à la survenue de plusieurs ouvertures de fusible 30 successives, augmentant l'aptitude la batterie 1 à assurer la fourniture d'électricité malgré des défaillances multiples. Bien entendu, s'il n'y a plus de branches 2 disponibles, la batterie 1 est arrêtée. Il est possible de prévoir que le BMS envoie une information sur l'anomalie de fusible 30 détectée à la machine 16, de préférence identifiant la branche 2 affectée par l'anomalie.

L'invention n'est pas limitée au mode de réalisation décrit et représenté aux figures annexées. Des modifications restent possibles, notamment du point de vue de la constitution des diverses caractéristiques techniques ou par substitution d'équivalents techniques, sans sortir pour autant du domaine de protection de l'invention.

## Revendications

1. Procédé de commande d'une batterie électrique (1) munie d'un système de gestion de batterie (32), la batterie électrique (1) comprenant au moins deux branches (2) connectées en parallèle, chaque branche (2) comprenant au moins un module (4) de stockage d'énergie, les branches (2) étant électriquement reliées à un boîtier de jonction par lequel transite le courant de la batterie (1), chaque branche (2) étant munie d'au moins un fusible (30) de protection adapté pour interrompre le passage d'un courant électrique en cas de sur-courant dans ladite branche (2),
**caractérisé en ce que** le procédé comprend :
- une détermination d'une absence ou d'une présence d'un courant de branche circulant dans une branche, et d'une absence ou d'une présence d'un courant de jonction correspondant au cumul des courants circulant dans les branches (2),
- une vérification de cohérence entre l'absence ou la présence d'un courant de branche et l'absence ou la présence d'un courant de jonction, une anomalie du fusible sur ladite branche (2) étant considérée en cas d'incohérence,
- une modification du fonctionnement du système de gestion de batterie (32) en fonction de l'anomalie du fusible, dans lequel l'autre branche (2) continue de fournir du courant.

2. Procédé selon la revendication 1, dans lequel la modification du fonctionnement du système de gestion de batterie comprend une réduction d'une limite de courant de jonction.

3. Procédé selon la revendication précédente, dans lequel la réduction de la limite du courant de jonction est fonction d'un facteur correspondant à la part de la branche (2) dans la fourniture de courant de la batterie (1).

4. Procédé selon l'une quelconque des revendications précédentes, dans lequel la détermination d'une absence ou d'une présence d'un courant de branche circulant dans une branche (2) comprend la mesure de l'intensité du courant de branche en utilisant une tension aux bornes d'une partie conductrice d'un module (4) de stockage d'énergie de ladite branche (2), ladite partie conductrice formant une portion d'un circuit de puissance par lequel transite au moins une partie du courant de branche.

5. Procédé selon la revendication précédente, dans lequel dans lequel la tension aux bornes d'une partie conductrice d'un module (4) est déterminée à partir d'un point de mesure parmi des points de mesure utilisés par une carte électronique (45) du module (4) pour déterminer des tensions internes audit modules, et à partir d'un autre point de mesure correspondant à une borne de connexion (43, 44) de puissance du module (4).

6. Procédé selon l'une des revendications 4 ou 5, dans lequel la partie conductrice d'un module est une barre omnibus (48), ou bus-barre.

7. Procédé selon l'une quelconque des revendications précédentes, dans lequel la détermination d'une absence ou d'une présence d'un courant de branche circulant dans une branche comprend une mesure du courant de branche, et la comparaison avec au moins un seuil, l'absence ou la présence d'un courant de branche étant déterminée en fonction d'un résultat de la comparaison.

8. Procédé selon l'une quelconque des revendications précédentes, dans lequel la détermination d'une absence ou d'une présence d'un courant de branche circulant dans une branche est basée sur une pluralité de mesures de courant dans la branche en différents points de ladite branche, l'absence ou la présence d'un courant de branche étant déterminée à partir d'une valeur dérivée de la pluralité de mesures de courant.

9. Batterie électrique (1) munie d'un système de gestion de batterie (32), la batterie électrique (1) comprenant au moins deux branches (2) connectées en parallèle, chaque branche (2) comprenant au moins un module (4) de stockage d'énergie, les branches étant électriquement reliées à un boîtier de jonction par lequel transite le courant de la batterie, chaque branche étant munie d'au moins un fusible de protection adapté pour interrompre le passage d'un courant électrique en cas de sur-courant dans ladite branche, **caractérisé en ce que** le système de gestion de batterie est configuré pour mettre en œuvre :
- une vérification de cohérence entre l'absence ou la présence d'un courant de branche et l'absence ou la présence d'un courant de jonction, une anomalie du fusible sur ladite branche étant considérée en cas d'incohérence,
- une modification du fonctionnement du système de gestion de batterie en fonction de l'anomalie du fusible, dans lequel l'autre branche continue de fournir du courant, conformément au procédé l'une quelconque des revendications précédentes.

10. Véhicule à propulsion électrique comprenant la batterie électrique de la revendication 9.

## Patentansprüche

1. Verfahren zur Steuerung einer elektrischen Batterie (1), die mit einem Batteriemanagementsystem (32) ausgestattet ist, wobei die elektrische Batterie (1) mindestens zwei parallel geschaltete Abzweigungen (2) umfasst, wobei jede Abzweigung (2) mindestens ein Energiespeichermodul (4) umfasst, wobei die Abzweigungen (2) elektrisch mit einem Anschlusskasten verbunden sind, durch den der Strom der Batterie (1) fließt, wobei jede Abzweigung (2) mit mindestens einer Schutzsicherung (30) ausgestattet ist, die geeignet ist, den Durchfluss eines elektrischen Stroms im Falle eines Überstroms in der Abzweigung (2) zu unterbrechen,
**dadurch gekennzeichnet, dass** das Verfahren umfasst:
- eine Bestimmung einer Abwesenheit oder einer Anwesenheit eines in einer Abzweigung fließenden Abzweigungsstroms und einer Abwesenheit oder einer Anwesenheit eines Verbindungsstroms, der der Kumulation der in den Abzweigungen (2) fließenden Ströme entspricht,
- eine Überprüfung der Kohärenz zwischen der Abwesenheit oder der Anwesenheit eines Abzweigungsstroms und der Abwesenheit oder der Anwesenheit eines Verbindungsstroms, wobei im Falle einer Inkohärenz eine Anomalie der Sicherung in der Abzweigung (2) angenommen wird,
- eine Änderung der Funktionsweise des Batteriemanagementsystems (32) in Abhängigkeit von der Anomalie der Sicherung, wobei die andere Abzweigung (2) weiterhin Strom liefert.

2. Verfahren nach Anspruch 1, wobei die Änderung der Funktionsweise des Batteriemanagementsystems eine Verringerung einer Verbindungsstromgrenze umfasst.

3. Verfahren nach vorstehendem Anspruch, wobei die Verringerung der Verbindungsstromgrenze von einem Faktor abhängt, der dem Anteil der Abzweigung (2) an der Stromversorgung der Batterie (1) entspricht.

4. Verfahren nach einem der vorstehenden Ansprüche, wobei die Bestimmung einer Abwesenheit oder einer Anwesenheit eines in einer Abzweigung (2) fließenden Abzweigungsstroms das Messen der Stärke des Abzweigungsstroms unter Verwendung einer Spannung an den Klemmen eines leitenden Teils eines Energiespeichermoduls (4) der Abzweigung (2) umfasst, wobei der leitende Teil einen Abschnitt eines Stromkreises bildet, durch den mindestens ein Teil des Abzweigungsstroms fließt.

5. Verfahren nach vorstehendem Anspruch, wobei die Spannung an den Klemmen eines leitenden Teils eines Moduls (4) anhand eines Messpunkts unter den von einer Elektronikkarte (45) des Moduls (4) zur Bestimmung der internen Spannungen in den Modulen verwendeten Messpunkten und anhand eines anderen Messpunkts, der einer Stromanschlussklemme (43, 44) des Moduls (4) entspricht, bestimmt wird.

6. Verfahren nach einem der Ansprüche 4 oder 5, wobei der leitende Teil eines Moduls eine Sammelschiene (48) oder ein Busverteiler ist.

7. Verfahren nach einem der vorstehenden Ansprüche, wobei die Bestimmung einer Abwesenheit oder einer Anwesenheit eines in einer Abzweigung fließenden Abzweigungsstroms eine Messung des Abzweigungsstroms und den Vergleich mit mindestens einem Schwellenwert umfasst, wobei die Abwesenheit oder die Anwesenheit eines Abzweigungsstroms in Abhängigkeit von einem Ergebnis des Vergleichs bestimmt wird.

8. Verfahren nach einem der vorstehenden Ansprüche, wobei die Bestimmung einer Abwesenheit oder einer Anwesenheit eines in einer Abzweigung fließenden Abzweigungsstroms auf einer Vielzahl von Strommessungen in der Abzweigung an verschiedenen Punkten der Abzweigung basiert, wobei die Abwesenheit oder die Anwesenheit eines Abzweigungsstroms anhand eines Wertes bestimmt wird, der aus der Vielzahl von Strommessungen abgeleitet ist.

9. Elektrische Batterie (1), die mit einem Batteriemanagementsystem (32) ausgestattet ist, wobei die elektrische Batterie (1) mindestens zwei parallel geschaltete Abzweigungen (2) umfasst, wobei jede Abzweigung (2) mindestens ein Energiespeichermodul (4) umfasst, wobei die Abzweigungen elektrisch mit einem Anschlusskasten verbunden sind, durch den der Strom der Batterie fließt, wobei jede Abzweigung mit mindestens einer Schutzsicherung ausgestattet ist, die geeignet ist, den Durchfluss eines elektrischen Stroms im Falle eines Überstroms in der Abzweigung zu unterbrechen **dadurch gekennzeichnet, dass** das Batteriemanagementsystem ausgelegt ist, um durchzuführen:
- eine Überprüfung der Kohärenz zwischen der Abwesenheit oder der Anwesenheit eines Abzweigungsstroms und der Abwesenheit oder der Anwesenheit eines Verbindungstroms, wobei im Falle einer Inkohärenz eine Anomalie der Sicherung in der Abzweigung angenommen wird,
- eine Änderung der Funktionsweise des Batteriemanagementsystems in Abhängigkeit von der Anomalie der Sicherung, wobei die andere Abzweigung weiterhin Strom liefert, gemäß dem Verfahren nach einem der vorstehenden Ansprüche.

10. Fahrzeug mit Elektroantrieb, das die elektrische Batterie von Anspruch 9 umfasst.

## Claims

1. A method for controlling an electric battery (1) equipped with a battery management system (32), the electric battery (1) comprising at least two branches (2) connected in parallel, each branch (2) comprising at least one energy storage module (4), the branches (2) being electrically connected to a junction box through which the battery (1) current passes, each branch (2) being equipped with at least one protection fuse (30) suitable for interrupting the passage of an electric current in the event of an overcurrent in said branch (2),
**characterized in that** the method comprises:
- the determination of an absence or of a presence of a branch current flowing through a branch, and of an absence or a presence of a junction current equivalent to the accumulated currents flowing through the branches (2),
- a check of the consistency between the absence or the presence of a branch current and the absence or the presence of a junction current, an anomaly of the fuse on said branch (2) being considered in the event of an inconsistency,
- a modification of the operation of the battery management system (32) as a function of the anomaly of the fuse, in which the other branch (2) continues to supply current.

2. The method as claimed in claim 1, wherein the modification of the operation of the battery management system comprises a reduction of a junction current limit.

3. The method as claimed in the preceding claim, wherein the reduction of the junction current limit is a function of a factor corresponding to the portion of the branch (2) in the current supply of the battery (1).

4. The method as claimed in any of the preceding claims, wherein the determination of an absence or of a presence of a branch current flowing through a branch (2) comprises the measurement of the amperage of the branch current using a voltage across the terminals of a conductive part of an energy storage module (4) of said branch (2), said conductive part forming a portion of a power circuit through which at least a part of the branch current passes.

5. The method as claimed in the preceding claim, wherein the voltage across the terminals of a conductive part of a module (4) is determined based on a measurement point from among the measurement points used by an electronics board (45) of the module (4) to determine internal voltages of said modules, and based on another measurement point corresponding to a power connection terminal (43, 44) of the module (4).

6. The method as claimed in one of claims 4 or 5, wherein the conductive part of a module is a busbar (48).

7. The method as claimed in any of the preceding claims, wherein the determination of an absence or of a presence of a branch current flowing through a branch comprises the measurement of the branch current, and the comparison to at least one threshold, the absence or the presence of a branch current being determined as a function of a result of the comparison.

8. The method as claimed in any of the preceding claims, wherein the determination of an absence or of a presence of a branch current flowing through a branch is based on a plurality of current measurements in the branch at different points of said branch, the absence or the presence of a branch current being determined based on a value derived from the plurality of current measurements.

9. An electric battery (1) equipped with a battery management system (32), the electric battery (1) comprising at least two branches (2) connected in parallel, each branch (2) comprising at least one energy storage module (4), the branches being electrically connected to a junction box through which the battery current passes, each branch being equipped with at least one protection fuse suitable for interrupting the passage of an electric current in the event of an overcurrent in said branch, the battery management system being configured to implement:
- a check of the consistency between the absence or the presence of a branch current and the absence or the presence of a junction current, an anomaly of the fuse on said branch being considered in the event of an inconsistency,
- the modification of the operation of the battery management system as a function of the anomaly of the fuse, in which the other branch continues to supply current, in accordance with the method as claimed in any of the preceding claims.

10. An electric propulsion vehicle comprising the electric battery of claim 9.
